# FASCICULE DE BREVET EUROPEEN

(11) **EP 3 729 273 B1**
(45) Date de publication et mention de la délivrance du brevet: **26.01.2022**
(21) Numéro de dépôt: 18839831.7
(22) Date de dépôt: 13.12.2018
(51) Int. Cl.: G06F 11/263, G06F 11/36

(54) **SYSTEME ET PROCEDE D'ELABORATION ET D'EXECUTION DE TESTS FONCTIONNELS POUR GRAPPE DE SERVEURS**
SYSTEM UND VERFAHREN ZUM FORMULIEREN UND AUSFÜHREN VON FUNKTIONSTESTS FÜR CLUSTER-DE-SERVER
SYSTEM AND METHOD FOR FORMULATING AND EXECUTING FONCTIONAL TESTS FOR CLUSTER DE SERVERS

(30) Priorité: 21.12.2017 FR 1762741
(43) Date de publication de la demande: 28.10.2020
(73) Titulaire: BULL SAS, 78340 Les Clayes Sous Bois (FR)
(72) Inventeur: SAX, Antoine, 17180 Périgny (FR)
(74) Mandataire: Camus, Olivier Jean-Claude
(86) Numéro de dépôt international: PCT/FR2018/053288
(87) Numéro de publication internationale: WO 2019/122626

(56) Documents cités:
- WO-A1-2015/088316
- US-A1- 2012 246 621
- US-A1- 2013 198 567
- US-A1- 2014 324 378
- US-B1- 7 127 641

## Description

La présente invention concerne un système d'élaboration et d'exécution de tests fonctionnels portant sur des équipements d'un réseau en grappe de serveurs. Elle concerne également une grappe de serveurs et une installation informatique comportant un tel système, ainsi qu'un procédé d'élaboration et d'exécution de tests fonctionnels pour grappe de serveurs.

Les grappes de serveurs sont des réseaux complexes comportant souvent un grand nombre de nœuds de calcul et service hétérogènes interconnectés entre eux par au moins un réseau de transmission de données. Ces nœuds de calculs et service comportent généralement des ordinateurs puissants avec un stockage partagé en baies de stockage, apparaissant de l'extérieur comme un calculateur à très forte puissance de calcul, dit calculateur à haute performance de traitement ou calculateur HPC (de l'Anglais « High Performance Computing »). Ces installations optimisées permettent la répartition de traitements complexes et/ou de calculs parallèles sur au moins une partie des nœuds de calcul.

Dans ce type de réseau particulièrement hétérogène, il est nécessaire de procéder régulièrement à des tests fonctionnels sur les équipements. Ces tests se font dans des environnements de plus en plus variés et distribués. Il est donc important de pouvoir les définir le plus simplement possible et de les documenter à l'aide de données descriptives. Ces tests doivent de plus généralement se faire par des commandes successives entrées sur interface en ligne de commande CLI (de l'anglais « Command Line Interface »), ce qui ne les rend pas aisés à élaborer. Il existe aujourd'hui des outils logiciels permettant d'élaborer préalablement des fichiers de commandes regroupant plusieurs commandes de tests fonctionnels à exécuter sur interface en ligne de commande, puis d'exécuter ces fichiers de commandes sur l'interface en ligne de commande adéquate. Ces fichiers sont généralement appelés fichiers de scripts, les scripts étant constitués des commandes qui sont alors interprétées automatiquement par l'interface en ligne de commande pour exécuter les tests fonctionnels correspondants.

Par équipements d'une grappe de serveurs on entend les nœuds de calcul précités, mais également les commutateurs (généralement appelés « switch »), les baies informatiques de stockage de données, les gestionnaires de matériels, les alimentations électriques administrables, ou d'une façon plus générale tous les éléments raccordables entre eux à l'aide de ports de connexion qui ont besoin d'une adresse logique, notamment une adresse IP, pour fonctionner.

Le document US 2013/0198567 A1 décrit un système/procédé d'élaboration et d'exécution de tests fonctionnels d'applications logicielles mises à disposition d'utilisateurs dans un réseau d'ordinateurs. Le système prévoit de façon conventionnelle un processeur, des moyens de stockage et une plate-forme logicielle constituée de plusieurs modules fonctionnels stockés dans les moyens de stockage et exécutables par le processeur. L'un de ces modules fonctionnels est conçu pour élaborer des fichiers de commandes de tests fonctionnels et la plate-forme logicielle présente pour cela une interface associée dédiée à la saisie de ces commandes de tests fonctionnels.

L'invention s'applique ainsi plus particulièrement à un système d'élaboration et d'exécution de tests fonctionnels portant sur des équipements d'un réseau en grappe de serveurs, comportant au moins un processeur, des moyens de stockage, une interface en ligne de commande stockée dans les moyens de stockage et exécutable par le processeur, ainsi qu'une plate-forme logicielle constituée de plusieurs modules fonctionnels stockés dans les moyens de stockage et exécutables par le processeur, dans lequel :
- la plate-forme logicielle comporte un module fonctionnel d'élaboration d'un fichier de commandes de tests fonctionnels pour l'interface en ligne de commande et une interface associée dédiée à la saisie de ces commandes de tests fonctionnels dans au moins un bloc exécutable du fichier de commandes,
- la plate-forme logicielle comporte un module fonctionnel d'exécution du fichier de commandes, conçu pour activer l'interface en ligne de commande et y exécuter ledit au moins un bloc exécutable du fichier de commandes.

Par « bloc exécutable » du fichier de commandes, on entend une portion écrite délimitée du fichier de commande dont le contenu est destiné à être interprété et exécuté par une interface en ligne de commande.

Mais les systèmes existants ne permettent pas d'avoir la documentation descriptive des tests fonctionnels au plus près des commandes, notamment pas dans les fichiers de scripts.

Il existe bien des outils logiciels permettant d'intégrer dans un même fichier des lignes d'instructions en langage de programmation compilable et exécutable avec de la documentation descriptive de ces lignes d'instructions, dans des blocs descriptifs dédiés, mais ils ne sont ni conçus, ni adaptés pour des commandes de tests fonctionnels qui doivent être interprétées par des interfaces en ligne de commande.

Il peut ainsi être souhaité de prévoir un système d'élaboration et d'exécution de tests fonctionnels, portant sur au moins une partie des équipements d'un réseau en grappe de serveurs, qui permette de s'affranchir d'au moins une partie des problèmes et contraintes précités.

Il est donc proposé un système d'élaboration et d'exécution de tests fonctionnels portant sur des équipements d'un réseau en grappe de serveurs, comportant au moins un processeur, des moyens de stockage, une interface en ligne de commande stockée dans les moyens de stockage et exécutable par le processeur, ainsi qu'une plate-forme logicielle constituée de plusieurs modules fonctionnels stockés dans les moyens de stockage et exécutables par le processeur, dans lequel :
- la plate-forme logicielle comporte un module fonctionnel d'élaboration d'un fichier de commandes de tests fonctionnels pour l'interface en ligne de commande et une interface associée dédiée à la saisie de ces commandes de tests fonctionnels dans au moins un bloc exécutable du fichier de commandes,
- la plate-forme logicielle comporte un module fonctionnel d'exécution du fichier de commandes, conçu pour activer l'interface en ligne de commande et y exécuter ledit au moins un bloc exécutable du fichier de commandes,
- l'interface associée au module fonctionnel d'élaboration du fichier de commandes est en outre dédiée à la saisie de descripteurs des commandes de tests fonctionnels dans au moins un bloc descriptif du fichier de commandes et à l'identification dudit au moins un bloc descriptif dans le fichier de commandes comme différent dudit au moins un bloc exécutable, et
- le module fonctionnel d'exécution du fichier de commandes est conçu pour ne pas exécuter ledit au moins un bloc descriptif du fichier de commandes dans l'interface en ligne de commande.

Ainsi, la présente invention permet d'agréger des commandes de tests fonctionnels pour grappe de serveurs, c'est-à-dire à interprétation et exécution par une interface de ligne de commande, avec de la documentation descriptive de ces commandes au sein d'un même fichier de commandes, sans que l'interface en ligne de commande ne puisse faire la confusion entre ce qui doit être interprété/exécuté et ce qui ne doit pas l'être.

De façon optionnelle :
- une interface de programmation applicative exécutable par le module fonctionnel d'exécution du fichier de commandes est en outre stockée dans les moyens de stockage et comporte une pluralité de commandes de vérification de résultats des commandes de tests fonctionnels, et
- l'interface associée au module fonctionnel d'élaboration du fichier de commandes est en outre dédiée à la saisie de ces commandes de vérification dans ledit au moins un bloc exécutable du fichier de commandes.

De façon optionnelle également, le module fonctionnel d'exécution du fichier de commandes est conçu pour exécuter l'interface de programmation applicative dans l'interface en ligne de commande.

De façon optionnelle également, la pluralité de commandes de vérification comporte au moins deux éléments de l'ensemble des commandes de vérification suivantes :
- une vérification d'égalité stricte entre deux paramètres,
- une vérification d'égalité approximative entre deux paramètres, à un écart prédéterminé près,
- une vérification d'inégalité stricte entre deux paramètres,
- une comparaison entre deux paramètres par critère de supériorité, stricte ou égale, ou par critère d'infériorité, stricte ou égale,
- une vérification de valeur booléenne,
- une vérification d'ensemble vide,
- une vérification d'ensemble non vide,
- une vérification d'inclusion d'une première chaîne de caractère(s) dans une deuxième chaîne de caractère(s),
- une vérification de non inclusion d'une première chaîne de caractère(s) dans une deuxième chaîne de caractère(s),
- une vérification d'égalité stricte entre deux listes de paramètres, et
- une vérification d'égalité stricte entre deux ensembles de paramètres distincts.

De façon optionnelle également, la pluralité de commandes de vérification comporte en outre une commande de création d'un fichier de résultats et d'inscription, dans ce fichier de résultats, de tous les résultats d'autres commandes de vérification saisies avant cette commande de création de fichier de résultats dans ledit au moins un bloc exécutable du fichier de commandes.

De façon optionnelle également, l'interface associée au module fonctionnel d'élaboration du fichier de commandes est en outre dédiée à la saisie de descripteurs formulés selon un format de récit d'utilisateur en trois éléments descriptifs successifs incluant :
- un premier élément d'identification d'un utilisateur,
- un deuxième élément d'identification d'une action de test équivalente à au moins une commande de test fonctionnel, et
- un troisième élément d'identification d'au moins une finalité de vérification équivalente à au moins l'une des commandes de vérification de l'interface de programmation applicative.

De façon optionnelle également, l'interface associée au module fonctionnel d'élaboration du fichier de commandes est stockée dans les moyens de stockage sous la forme d'une application logicielle web.

Il est également proposé une grappe de serveurs comportant des nœuds de calcul et de service interconnectés par au moins un réseau de transmission de données entre ces nœuds de calcul et de service, dans laquelle au moins un nœud de service est un serveur d'administration comportant un système d'élaboration et d'exécution de tests fonctionnels selon l'invention.

Il est également proposé une installation informatique comportant :
- une grappe de serveurs comportant des nœuds de calcul et de service interconnectés par au moins un réseau de transmission de données entre ces nœuds de calcul et de service,
- un terminal informatique distant de commande de la grappe de serveurs, ce terminal comportant un système d'élaboration et d'exécution de tests fonctionnels selon l'invention, pour l'élaboration et l'exécution de tests fonctionnels portant sur au moins une partie des équipements de la grappe de serveurs, et
- un réseau de transmission de données entre le terminal informatique distant et la grappe de serveurs.

Il est également proposé un procédé d'élaboration et d'exécution de tests fonctionnels portant sur des équipements d'un réseau en grappe de serveurs, comportant les étapes suivantes :
- élaboration d'un fichier de commandes de tests fonctionnels exécutables par une interface en ligne de commande, à l'aide d'une interface dédiée à la saisie de ces commandes de tests fonctionnels dans au moins un bloc exécutable du fichier de commandes, cette interface de saisie étant associée à un module fonctionnel d'élaboration du fichier de commandes d'une plate-forme logicielle exécutée par au moins un processeur ayant accès à des moyens de stockage du module fonctionnel d'élaboration et de l'interface en ligne de commande,
- exécution du fichier de commandes par un module fonctionnel d'exécution de la plate-forme logicielle stocké dans les moyens de stockage, ce module fonctionnel d'exécution étant conçu pour activer l'interface en ligne de commande et y exécuter ledit au moins un bloc exécutable du fichier de commandes,
dans lequel :
- l'élaboration du fichier de commandes comporte la saisie de descripteurs des commandes de tests fonctionnels dans au moins un bloc descriptif du fichier de commandes et l'identification dudit au moins un bloc descriptif dans le fichier de commandes comme différent dudit au moins un bloc exécutable, et
- l'exécution du fichier de commandes comporte l'exclusion dudit au moins un bloc descriptif du fichier de commandes dans ce qui doit être exécuté par l'interface en ligne de commande.

L'invention sera mieux comprise à l'aide de la description qui va suivre, donnée uniquement à titre d'exemple et faite en se référant aux dessins annexés dans lesquels :
- la figure 1 représente schématiquement la structure générale d'un système informatique pour l'élaboration et l'exécution de tests fonctionnels portant sur au moins une partie des équipements d'un réseau en grappe de serveurs, selon un mode de réalisation de l'invention,
- la figure 2 illustre les étapes successives d'un procédé d'élaboration et d'exécution de tests fonctionnels, portant sur au moins une partie des équipements d'un réseau en grappe de serveurs, mis en œuvre par le système informatique de la figure 1,
- la figure 3 représente schématiquement un exemple d'installation informatique comportant une grappe de serveurs, et
- la figure 4 illustre un exemple d'élaboration d'un fichier de commandes par exécution d'une première partie des étapes du procédé de la figure 2.

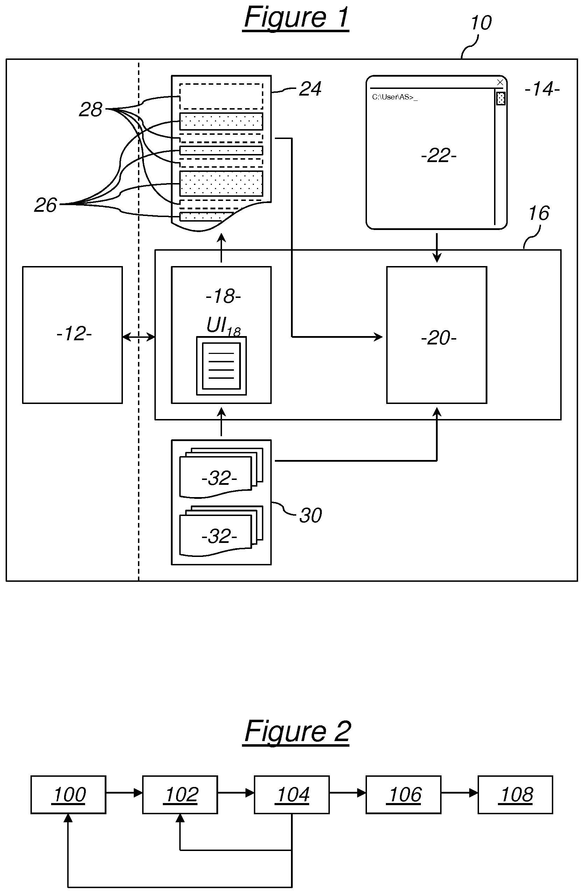

Le système informatique 10 représenté sur la figure 1, par exemple un ordinateur, comporte un processeur 12 associé de façon classique à des moyens de stockage 14, par exemple une mémoire RAM, pour le stockage de fichiers de données et de programmes d'ordinateurs exécutables par le processeur 12.

Parmi les programmes d'ordinateurs exécutables par le processeur 12, une plate-forme logicielle 16 comprenant plusieurs modules fonctionnels 18, 20 est stockée dans la mémoire 14. Le système informatique 10 tel qu'illustré sur la figure 1 comporte ainsi fonctionnellement deux programmes d'ordinateurs que représentent les modules fonctionnels 18, 20, ou deux fonctions d'un même programme d'ordinateur que représente la plate-forme logicielle 16. On notera par ailleurs que les modules fonctionnels 18, 20 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le système informatique 10 pourrait prendre la forme d'un dispositif électronique composé au moins partiellement de circuits numériques (sans programme d'ordinateur) pour la réalisation des mêmes actions.

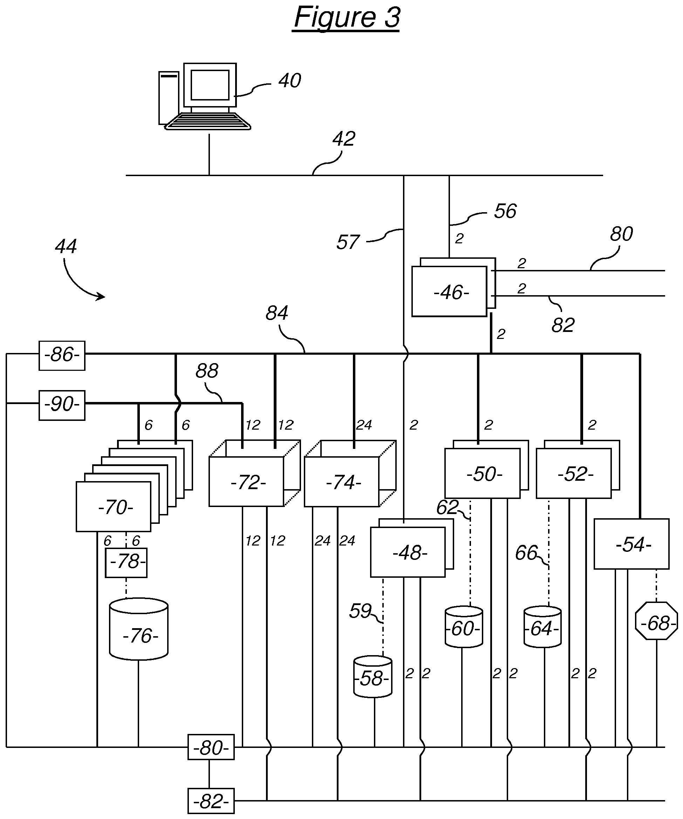

Il s'agit plus précisément d'un système 10 d'élaboration et d'exécution de tests fonctionnels portant sur des équipements d'un réseau en grappe de serveurs dont un exemple d'architecture sera détaillé en référence à la figure 3. Ces tests fonctionnels étant, de façon connue en soi, définis sous la forme de commandes à exécuter par interface en ligne de commande, une telle interface en ligne de commande 22, prête à recevoir ces commandes pour les interpréter et les exécuter, est stockée dans les moyens de stockage 14 et exécutable par le processeur 12.

Le premier module fonctionnel 18 de la plate-forme logicielle 16 est un module d'élaboration d'un fichier 24 de commandes de tests fonctionnels pour l'interface en ligne de commande 22. Il est associé à une interface UI₁₈ dédiée à la saisie de ces commandes de tests fonctionnels dans au moins un bloc exécutable 26 du fichier de commandes 24. Ces commandes sont choisies parmi toutes celles déjà connues pour tester les équipements de grappes de serveurs. Conformément à un premier aspect de l'invention, l'interface UI₁₈ est en outre dédiée à la saisie de descripteurs des commandes de tests fonctionnels dans au moins un bloc descriptif 28 du fichier de commandes 24. Ces descripteurs peuvent comporter des commentaires informels sur les tests fonctionnels à réaliser ou plus généralement de la documentation associée. La figure 1 illustre à titre d'exemple non limitatif quatre blocs exécutables 26 et quatre blocs descriptifs 28 dans le fichier de commandes 24. Ces blocs sont clairement distingués d'une façon ou d'une autre. En d'autres termes, l'interface UI₁₈ comporte des moyens, par exemple des cadres ou espaces différents, des icones de sélection, etc., pour identifier les blocs descriptifs 28 dans le fichier de commandes 24 à élaborer comme différents des blocs exécutables 26. Enfin, selon un mode de réalisation optionnel mais avantageux du point de vue de l'ergonomie, l'interface UI₁₈ est stockée dans les moyens de stockage 14 sous la forme d'une application web, c'est-à-dire une application logicielle avec laquelle il est possible d'interagir à l'aide d'un navigateur conforme à la technologie de la Toile d'Araignée Mondiale (de l'anglais « World Wide Web »).

Le fichier de commandes 24 est destiné à être enregistré en mémoire dans les moyens de stockage 14. Il peut être élaboré en une ou plusieurs fois, notamment par plusieurs exécutions du premier module fonctionnel 18 et de son interface de saisie UI₁₈.

Le deuxième module fonctionnel 20 de la plate-forme logicielle 16 est un module d'exécution du fichier de commandes 24, conçu pour activer, lorsqu'il est exécuté par le processeur 12, l'interface en ligne de commande 22 et y exécuter le ou les blocs exécutables 26 du fichier de commandes 24. Il est en outre conçu pour ne pas exécuter le ou les blocs descriptifs 28 du fichier de commandes 24 dans l'interface en ligne de commande 22.

Conformément à un deuxième aspect de l'invention, une interface de programmation applicative 30 exécutable par le deuxième module fonctionnel 20 est en outre stockée dans les moyens de stockage 14 et comporte une pluralité de commandes 32 de vérification de résultats des commandes de tests fonctionnels qui peuvent être également saisies à l'aide de l'interface UI₁₈ pour être ajoutées, dans le ou les blocs exécutables 26, aux commandes de tests fonctionnels. Selon une première variante de réalisation, une commande d'activation de cette interface de programmation applicative 30 peut être saisie manuellement par un utilisateur dans un premier bloc exécutable du fichier de commandes 24, pour son interprétation et exécution ultérieure par l'interface en ligne de commande 22 lorsque celle-ci est elle-même activée par le deuxième module fonctionnel 20. Selon une deuxième variante de réalisation, le deuxième module fonctionnel 20 est conçu pour exécuter l'interface de programmation applicative 30 directement dans l'interface en ligne de commande 22 sans qu'elle n'ait besoin d'être saisie par un utilisateur. D'autres variantes de réalisation sont envisageables pour activer l'interface de programmation applicative 30 avant toute exécution du ou des blocs exécutables 26 comportant les commandes de tests fonctionnels et les commandes de vérification 32.

Par convention et souci de simplicité illustrative, l'interface de programmation applicative 30 est nommée « ftapi » et est appelée ainsi dans l'interface en ligne de commande 22.

Les commandes de vérification 32 de cette interface de programmation applicative 30 « ftapi » comportent par exemple :
- une commande « ftapi.assertEqual(a, b) » de vérification d'égalité stricte entre deux paramètres a et b,
- une commande « ftapi.assertAlmostEqual(a, b) » de vérification d'égalité approximative entre deux paramètres a et b, à un écart prédéterminé près (avantageusement paramétrable),
- une commande « ftapi.assertNotEqual(a, b) » de vérification d'inégalité stricte entre deux paramètres a et b,
- une commande « ftapi.assertGreater(a, b) » de comparaison entre deux paramètres a et b, vérifiant si a est strictement supérieur à b ou pas,
- une commande « ftapi.assertGreaterEqual(a, b) » de comparaison entre deux paramètres a et b, vérifiant si a est supérieur ou égal à b ou pas,
- une commande « ftapi.assertLess(a, b) » de comparaison entre deux paramètres a et b, vérifiant si a est strictement inférieur à b ou pas,
- une commande « ftapi.assertLessEqual(a, b) » de comparaison entre deux paramètres a et b, vérifiant si a est inférieur ou égal à b ou pas,
- une commande « ftapi.assertTrue(x) » de vérification de valeur booléenne, vérifiant si un paramètre x est « vrai »,
- une commande « ftapi.assertFalse(x) » de vérification de valeur booléenne, vérifiant si un paramètre x est « faux »,
- une commande « ftapi.assertlsNone(x) » de vérification d'ensemble vide, vérifiant si un ensemble x est vide,
- une commande « ftapi.assertlsNotNone(x) » de vérification d'ensemble non vide, vérifiant si un ensemble x est non vide,
- une commande « ftapi.assertln(a, b)» de vérification d'inclusion d'une première chaîne de caractère(s) a dans une deuxième chaîne de caractère(s) b,
- une commande « ftapi.assertNotln(a, b)» de vérification de non inclusion d'une première chaîne de caractère(s) a dans une deuxième chaîne de caractère(s) b,
- une commande « ftapi.assertListEqual(a, b) » de vérification d'égalité stricte entre deux listes de paramètres a et b,
- une commande « ftapi.assertSetEqual(a, b) » de vérification d'égalité stricte entre deux ensemble a et b de paramètres distincts : un « ensemble » est en effet un cas particulier de « liste » dans laquelle il ne peut y avoir plus d'une occurrence d'un même élément.
- une commande « ftapi.report("report.txt") » de création d'un fichier de résultats "report.txt" et d'inscription, dans ce fichier de résultats "report.txt", de tous les résultats d'autres commandes de vérification 32 saisies avant cette commande de création de fichier de résultats dans le ou les blocs exécutables 26 du fichier de commandes 24.

Cette liste n'est bien évidemment pas exhaustive et d'autres commandes de vérification 32 peuvent être envisagées en fonction des besoins de vérification.

Par ailleurs, au moins une partie des descripteurs destinés à être intégrés dans le ou les blocs descriptifs 28 peut être saisie en suivant un format particulier qualifié de « récit d'utilisateur » (de l'anglais « user story ») connu en méthodologie de développement selon le manifeste de développement logiciel Agile (de l'anglais « Manifesto for Agile software development »). Selon ce format, un commentaire descriptif s'écrit en trois éléments successifs incluant :
- un premier élément d'identification d'un utilisateur, introduit suite à un premier mot-clé tel que « En tant que » (ou « As a » en anglais), pour répondre à la question « qui ? »,
- un deuxième élément d'identification d'une action de test, introduit suite à un deuxième mot-clé tel que « Je veux » (ou « I want to » en anglais), pour répondre à la question « quoi ? », et
- un troisième élément d'identification d'au moins une finalité de vérification, introduit suite à un troisième mot-clé tel que « Afin de » (ou « In order to » en anglais), pour répondre à la question « pourquoi ? ».

On remarque que ce formalisme est avantageux parce qu'il permet de décrire, simplement et de façon bien formatée, au moins une commande de test fonctionnel pouvant être équivalente au deuxième élément d'identification suivie d'au moins une commande de vérification 32 (de résultats de ladite au moins une commande de test fonctionnel) pouvant être équivalente au troisième élément d'identification.

Ainsi, un utilisateur peut exprimer en langage commun formaté le contenu d'une fonctionnalité à exécuter en s'identifiant (premier élément du récit d'utilisateur), en définissant le ou les tests fonctionnels à exécuter (deuxième élément du récit d'utilisateur) et en définissant la ou les vérifications à exécuter (troisième élément du récit d'utilisateur). Il saisit le récit d'utilisateur correspondant dans un bloc descriptif 28 du fichier de commandes 24. Il est alors très facile de traduire cette fonctionnalité sans aucune ambiguïté, par lui ou par un autre utilisateur, en commandes de test(s) fonctionnel(s) et de vérification à saisir dans un bloc exécutable 26 du fichier de commandes 24. Les commentaires descriptifs sont ainsi introduits au plus près des commandes dans le fichier de commandes 24.

D'une façon générale, le système informatique de la figure 1 met en œuvre un procédé d'élaboration et d'exécution de tests fonctionnels pour grappe de serveurs, tel que celui dont les étapes sont illustrées sur la figure 2.

Au cours d'une première étape 100, le processeur 12 exécute le premier module fonctionnel 18 d'élaboration du fichier de commandes 24 qui active l'interface de saisie UI₁₈.

Au cours d'une étape suivante 102, un utilisateur saisit des commandes de tests fonctionnels et des commandes de vérification 32 à intégrer dans un ou plusieurs bloc(s) exécutable(s) 26, à l'aide de l'interface UI₁₈. Il saisit également des descripteurs des commandes de tests fonctionnels et de vérification à intégrer dans un ou plusieurs bloc(s) descriptif(s) 28, toujours à l'aide de l'interface UI₁₈. Il peut avantageusement saisir ces descripteurs au format de récit d'utilisateur, pour faciliter la compréhension des commandes à exécuter, mais il n'en pas l'obligation. Il peut en outre ajouter tous les commentaires informels qu'il souhaite dans les blocs descriptifs 28, ces derniers n'étant pas destinés à être exécutés par l'interface en ligne de commande 22.

Ensuite, au cours d'une étape de sauvegarde 104, l'utilisateur enregistre le fichier de commandes 24 qu'il a élaboré dans les moyens de stockage 14.

Les étapes 102 et 104, ou les étapes 100, 102 et 104, peuvent être répétées autant de fois que souhaité pour compléter le fichier de commandes 24 par un ou plusieurs utilisateurs. Il peut en effet faire l'objet d'un travail collaboratif.

Au cours d'une étape suivante 106, le processeur 12 exécute le deuxième module fonctionnel 20 d'exécution du fichier de commandes 24 pour activer l'interface en ligne de commande 22.

Enfin, au cours d'une dernière étape 108, le deuxième module fonctionnel 20 exécute le fichier de commandes 24 dans l'interface en ligne de commande 22. Cette exécution provoque l'interprétation et l'exécution des commandes qui sont dans le ou les blocs exécutables 26 de ce fichier 24, mais exclut, de l'interprétation et de l'exécution par l'interface en ligne de commande 22, le contenu du ou des blocs descriptifs de ce même fichier 24.

On notera que, conformément au deuxième aspect de l'invention, une commande d'exécution de l'interface de programmation applicative 30 peut être saisie lors de l'étape 102, automatiquement intégrée en tête du fichier de commandes 24 par le processeur 12 au cours de l'une quelconque des étapes 100, 102 et 104, ou automatiquement exécutée par le processeur 12 au cours de l'une quelconque des étapes 106 et 108.

L'installation informatique de la figure 3 illustre un exemple de grappe de serveurs.

Elle comporte un terminal de commande 40 relié à un réseau dorsal 42, généralement appelé réseau backbone (de l'anglais « backbone network »). C'est également à ce réseau dorsal 42 qu'est connectée une grappe de serveurs 44 apparaissant de l'extérieur, c'est à dire du point de vue du terminal de commande 40, comme une entité unique de calculateur HPC.

En fait, la grappe de serveurs 44 comporte plusieurs ordinateurs interconnectés entre eux au moyen de plusieurs réseaux, les uns et les autres étant hétérogènes.

L'ensemble des ordinateurs de la grappe de serveurs 44 constitue l'ensemble des nœuds de cette grappe. D'une façon plus générale, un nœud est un calculateur pouvant comporter une ou plusieurs unité(s) de calcul.

Dans la grappe de serveurs 44, on peut distinguer deux types de noeuds : les nœuds de calcul et les nœuds de service. Les nœuds de calcul sont ceux qui exécutent effectivement les différentes instructions de traitements commandées depuis le terminal de commande 40, sous la supervision des nœuds de services.

La plupart des nœuds de service sont dupliqués pour des raisons de sécurité. Autrement dit, chaque nœud de service est associé à un répliquât comportant les mêmes caractéristiques que lui et prêt à le remplacer immédiatement en cas de panne.

On notera par ailleurs que sur la figure 3, chaque fois qu'une multiplicité de liens existe entre deux entités (nœuds et/ou portions de réseaux), seul un lien sera représenté et accompagné d'un nombre indiquant le nombre de liens entre les deux entités, par souci de clarté de cette figure. En effet, si chaque lien devait être représenté, du fait de la complexité de la grappe de serveurs 44, il en résulterait une confusion qui nuirait à la compréhension de l'invention.

L'ensemble des nœuds de service de la grappe de serveurs 44 de la figure 3 comprend une interface de traitement 46, un serveur d'administration 48, un serveur 50 de gestion de métadonnées de la grappe, un serveur 52 de gestion des entrées/sorties et un serveur de gestion de données 54.

L'interface de traitement 46, plus communément qualifiée d'interface Login, remplit une fonction d'interface de calcul entre le réseau dorsal 42 et la grappe de serveurs 44. Elle est a priori de même nature que les nœuds de calcul mais est en outre dotée de compilateurs et d'outils spécifiques de calculs dont la présence sur cette interface est nécessaire pour traiter les instructions reçues du terminal de commande 40. L'interface de traitement 46 est dupliquée, comme indiqué précédemment pour des raisons de sécurité, et est donc reliée, avec son répliquât, au réseau dorsal 42 par l'intermédiaire de deux liens 56.

Le serveur d'administration 48 remplit une fonction d'administration générale de la grappe de serveurs 44. C'est notamment lui qui gère la distribution des instructions transmises par l'interface de traitement 46 aux différents nœuds de calcul en fonction de leur nature et disponibilité. Il est également dupliqué pour des raisons de sécurité. Le serveur d'administration 48 et son répliquât partagent une baie de stockage sur disque 58 à laquelle ils sont reliés par une pluralité de fibres optiques 59, pour un accès très rapide aux données stockées.

Pour permettre l'administration de la grappe de serveurs 44 par un utilisateur du terminal de commande 40, le serveur d'administration 48 est généralement lui aussi relié directement au réseau dorsal 42 avec son répliquât par l'intermédiaire de deux liens 57. Cela permet en outre à un utilisateur du terminal de commande 40 d'avoir plus d'emprise sur les stratégies et options de calcul choisies par la grappe de serveurs 44. Par ailleurs, dans certains modes de réalisation de grappes de serveurs de petite dimension n'ayant pas d'interface Login, ce double lien 57 est le seul lien entre la grappe de serveurs et le réseau dorsal.

Le serveur 50 de gestion de métadonnées, autrement appelé serveur MDS (de l'anglais « Meta Data Server ») et le serveur 52 de gestion des entrées/sorties, autrement appelé serveur OSS (de l'anglais « Object Storage Server ») remplissent une fonction de gestion du trafic des données exploitées par les nœuds de calcul de la grappe de serveurs 44. Ils gèrent pour cela un système de gestion de fichiers distribué, par exemple le système Lustre (marque déposée).

Ces deux serveurs sont également dupliqués et sont chacun reliés à une baie de stockage par fibres optiques. Le serveur MDS 50 et son répliquât partagent une baie de stockage sur disque 60 à laquelle ils sont reliés par une pluralité de fibres optiques 62. De même, le serveur OSS 52 et son répliquât partagent une baie de stockage sur disque 64 à laquelle ils sont reliés par une pluralité de fibres optiques 66.

Enfin le serveur de gestion de données 54 gère la protection des données de l'ensemble du calculateur HPC et est pour cela relié à une baie de stockage sur bandes 68. Ce serveur de gestion de données 54, contrairement aux autres nœuds de service de la grappe de serveurs 44, n'est pas dupliqué dans l'exemple illustré sur la figure 1.

L'ensemble des nœuds de calcul du calculateur HPC de la figure 1 est hétérogène et comporte plusieurs unités de nœuds de calcul telles que par exemple une première unité de calcul 70 comportant six serveurs, une deuxième unité de calcul 72 comportant douze serveurs et une troisième unité de calcul 74 comportant vingt-quatre serveurs.

Les six serveurs de la première unité de calcul 70 partagent une baie de stockage spécifique 76 à laquelle ils sont reliés via un commutateur 78. Cette baie de stockage 76 donne accès à des volumes de données qui sont par exemple organisés selon leur propre système de gestion de fichiers, qui peut être différent de celui géré par les serveurs MDS 50 et OSS 52.

Les différents nœuds de la grappe de serveurs 44 précités sont interconnectés entre eux à l'aide de plusieurs réseaux.

Un premier réseau 80, dit réseau d'administration, en général de type Ethernet, permet de relier le serveur d'administration 48 de la grappe de serveurs 44, via un port d'administration de ce serveur, aux autres nœuds de la grappe tels que l'interface de traitement 46, le serveur MDS 50, son répliquât et sa baie de stockage 60, le serveur OSS 52, son répliquât et sa baie de stockage 64, le serveur de gestion de données 54 et sa baie de stockage sur bandes 68, les première, deuxième et troisième unités de calcul 70, 72 et 74, ainsi que la baie de stockage spécifique 76 de la première unité de calcul 70.

De façon optionnelle, selon le matériel utilisé pour les nœuds de type serveur du calculateur, le réseau d'administration 80 peut être doublé d'un réseau de contrôle primaire 82 connecté au serveur d'administration 48 via un port de contrôle primaire de ce serveur différent du port d'administration. Ce réseau de contrôle primaire 82 est dédié à la mise sous tension, au démarrage, à l'arrêt et au traitement de certaines erreurs primaires prédéterminées, dites erreurs fatales et générant des fichiers Core, des serveurs qu'il administre. Dans l'exemple de la figure 1, le réseau de contrôle primaire 82 relie le serveur d'administration 48 à l'interface de traitement 46 et à son répliquât, au serveur MDS 50 et à son répliquât, au serveur OSS 52 et à son répliquât, au serveur de gestion de données 54, et aux deuxième et troisième unités de calcul 72 et 74.

Un deuxième réseau 84, dit réseau d'interconnexion des nœuds de calcul, relie entre eux, d'une part, les serveurs des première, deuxième et troisième unités de calcul 70, 72 et 74, et, d'autre part, l'interface de traitement 46, le serveur MDS 50, le serveur OSS 52 et le serveur de gestion de données 54. La commutation des données transitant entre les différents éléments interconnectés par ce réseau d'interconnexion 84 est assurée par un organe de commutation 86 de ce réseau qui est lui-même relié au réseau d'administration 80. Ce réseau d'interconnexion 84 a des caractéristiques de débit très élevé par rapport aux caractéristiques de débit du réseau d'administration 80. C'est en effet par ce réseau d'interconnexion 84 que transitent les données de calcul nécessaires à l'exécution des instructions de traitement transmises par le terminal de commande 40, via l'interface de traitement 46.

De façon optionnelle, le réseau d'interconnexion 84 peut être doublé d'un réseau supplémentaire d'interconnexion 88 relié à au moins une partie des éléments déjà reliés entre eux par le réseau d'interconnexion 84. Par exemple, dans la grappe de serveurs 44 de la figure 1, le réseau supplémentaire d'interconnexion 88 relie les serveurs des première et deuxième unités de calcul 70 et 72 pour doubler leur bande passante. De même, la commutation des données transitant entre les différents éléments interconnectés par ce réseau supplémentaire d'interconnexion 88 est assurée par un organe de commutation supplémentaire 90 de ce réseau qui est lui-même relié au réseau d'administration 80.

La structure de la grappe de serveurs 44, telle que décrite précédemment en référence à la figure 3, est appropriée pour la mise en œuvre de l'invention, mais d'autres configurations possibles de grappes, notamment de type calculateur HPC, comprenant tout ou partie des éléments précités, voire comprenant d'autres éléments en cas de plus grande complexité, conviennent aussi. Dans une configuration simple, une grappe de serveurs comporte des nœuds de services comprenant au moins un serveur d'administration, des nœuds de calcul, un réseau d'administration reliant le nœud d'administration aux autres nœuds de la grappe et un réseau d'interconnexion des nœuds de calcul dont le débit plus élevé que celui du réseau d'administration permet d'atteindre des performances élevées de calcul. Plus généralement, une grappe de serveurs, comporte en outre des commutateurs, des baies informatiques, des gestionnaires de matériels, des alimentations, ou tous autres éléments raccordables entre eux à l'aide de ports de connexion qui ont besoin d'une adresse logique, notamment une adresse IP, pour fonctionner et qui forment l'ensemble de ses équipements.

Conformément à l'invention, le système informatique 10 d'élaboration et d'exécution de tests fonctionnels décrit précédemment peut être implémenté dans le serveur d'administration 48, c'est-à-dire dans la grappe de serveurs 44 elle-même. En variante, il peut être implémenté à l'extérieur de la grappe de serveurs 44, c'est-à-dire dans un terminal distant tel que le terminal de commande 40, relié à la grappe de serveurs 44 grâce au réseau dorsal 42.

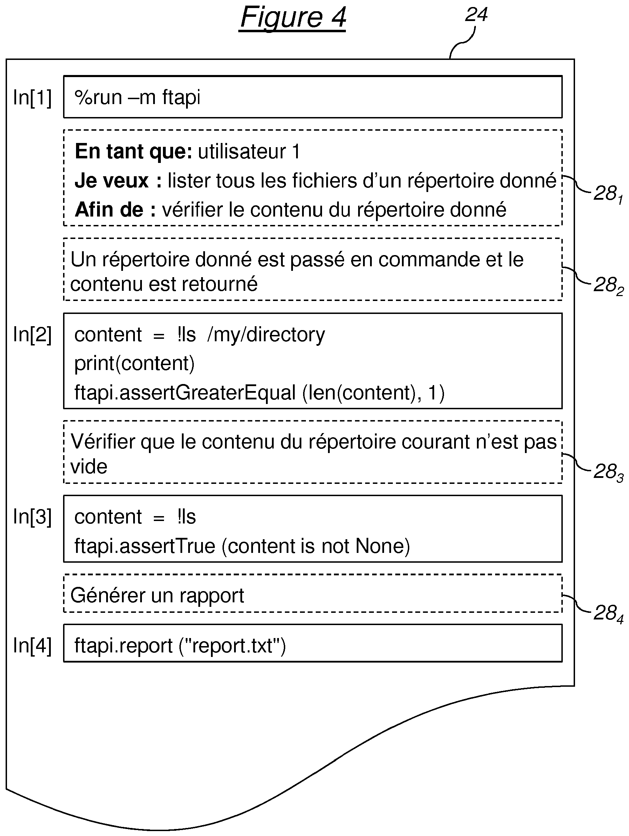

La figure 4 illustre un exemple de fichier de commandes 24 pouvant être obtenu par exécution des étapes 100, 102 et 104 du procédé de la figure 2 sur le système informatique 10 de la figure 1 tel qu'implémenté dans l'installation de la figure 3. Ce fichier de commandes 24 présente une succession de blocs exécutables et descripteurs.

Dans un premier bloc exécutable identifié par la référence In[1] automatiquement renseignée, une commande d'exécution de l'interface de programmation applicative 30 « ftapi » est par exemple saisie par un utilisateur. En variante et comme indiqué précédemment, le premier bloc exécutable ln[1] peut être automatiquement intégré en tête du fichier de commandes 24 sans nécessiter de saisie, ou même automatiquement exécuté sans nécessiter ni saisie, ni intégration visible dans le fichier de commandes 24.

Ensuite, dans un premier bloc descriptif 28₁, un récit d'utilisateur formaté a été saisi par un utilisateur identifié par « utilisateur 1 » dans le premier élément d'identification « En tant que ». Ce récit d'utilisateur décrit un test fonctionnel à réaliser « lister tous les fichiers d'un répertoire donné » dans le deuxième élément d'identification « Je veux ». Il décrit enfin une vérification à réaliser « vérifier le contenu du répertoire donné » dans le troisième élément d'identification « Afin de ».

Ensuite, dans un deuxième bloc descriptif 28₂, une description informelle des commandes à saisir pour exécuter le récit d'utilisateur du premier bloc descriptif 28₁ a été saisie.

Ensuite, dans un deuxième bloc exécutable identifié par la référence In[2] automatiquement renseignée, les trois commandes correspondant au récit d'utilisateur précité ont été saisies. Les deux premières, « content = !Is /my/directory » et « print(content) » sont relatives au test fonctionnel du deuxième élément d'identification du récit d'utilisateur. La troisième, choisie parmi les commandes de vérification 32, est relative à la vérification du troisième élément d'identification récit utilisateur: « ftapi.assertGreaterEqual(len(content), 1)». Si, par exemple, le répertoire indiqué « /my/directory » n'existe pas, une réponse de type « Is: cannot access '/my/directory' : No such file or directory » s'affiche dans l'interface en ligne de commande 22 et la commande de vérification « ftapi.assertGreaterEqual » retourne l'indication « No ».

Ensuite, dans un troisième bloc descriptif 28₃, une description informelle de commandes à saisir pour vérifier que le contenu d'un répertoire courant n'est pas vide a été saisie.

Les deux commandes correspondantes sont renseignées dans un troisième bloc exécutable identifié par la référence In[3] automatiquement renseignée. La première « content = !Is » est relative au test fonctionnel consistant à retourner le contenu du répertoire courant. La deuxième, choisie parmi les commandes de vérification 32, est relative à la vérification que le contenu retourné n'est pas vide : elle s'exprime par exemple par la commande « ftapi.assertTrue(content is not None). Si, par exemple, le répertoire courant n'est pas vide, la commande de vérification « ftapi.assertTrue » retourne l'indication « Yes ».

Ensuite, dans un quatrième bloc descriptif 28₄, une description informelle de commande à saisir pour générer un rapport a été saisie.

La commande de vérification correspondante est renseignée dans un quatrième bloc exécutable identifié par la référence In[4] automatiquement renseignée : « ftapi.report("report.txt") ». Conformément à cette dernière commande de vérification, un fichier « report.txt » est généré et contient par exemple les indications suivantes :
*Cell 02:*
   *assertGreaterEqual : No*
*Cell 03:*
   *assertTrue : Yes*

Ce contenu du fichier « report.txt » n'est bien sûr qu'un exemple. Mais sur le fond, il reprend les résultats fournis par les commandes de vérification qui ont été saisies dans les blocs exécutables précédant celui dans lequel a été saisie la commande « ftapi.report ». Il permet à un utilisateur qui n'a pas directement accès aux résultats des tests fonctionnels retournés par l'interface en ligne de commande 22 d'y accéder via ceux fournis par les commandes de vérification et repris dans le fichier « report.txt ».

Il apparaît clairement que, selon le premier aspect de l'invention détaillé précédemment, un système d'élaboration et d'exécution de tests fonctionnels pour grappe de serveurs tel que celui décrit précédemment permet de regrouper de la documentation descriptive, formatée ou informelle, de commandes de tests fonctionnels avec les commandes elles-mêmes dans un même fichier interprétable et exécutable par une interface en ligne de commande. En cela, l'invention répond à un besoin de plus en plus courant que les tests fonctionnels soient documentés au plus près des tests eux-mêmes.

Il apparaît également clairement que, selon le deuxième aspect de l'invention détaillé précédemment, des commandes de vérification peuvent avantageusement être ajoutées, via une interface de programmation applicative, pour interpréter les résultats retournés par les tests fonctionnels autrement qu'en décryptant les réponses fournies par l'interface en ligne de commande.

Tout cela permet une élaboration simplifiée d'une série de tests fonctionnels pour grappe de serveurs et une interprétation clarifiée de leurs résultats. Cet avantage est très important dans le contexte particulièrement complexe et hétérogène de l'administration des grappes de serveurs, ces dernières présentant des environnements de plus en plus variés et distribués. Cela permet également à un utilisateur aux compétences techniques limitées de pouvoir malgré tout participer à l'élaboration de tests fonctionnels.

On notera par ailleurs que l'invention n'est pas limitée aux modes de réalisation et variantes décrits précédemment.

Ainsi par exemple, en variante, le système informatique décrit précédemment peut être à serveurs et/ou processeurs multiples. En particulier, le module fonctionnel d'élaboration et le module fonctionnel d'exécution du fichier de commandes peuvent être stockés et exécutés par des processeurs ou même sur des serveurs différents.

Il apparaîtra plus généralement à l'homme de l'art que diverses modifications peuvent être apportées aux modes de réalisation et variantes décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué, et ce dans la limite de la portée des présentes revendications.

## Revendications

1. Système (10) d'élaboration et d'exécution de tests fonctionnels portant sur des équipements d'un réseau en grappe de serveurs (44), comportant au moins un processeur (12), des moyens de stockage (14), une interface en ligne de commande (22) stockée dans les moyens de stockage (14) et exécutable par le processeur (12), ainsi qu'une plate-forme logicielle (16) constituée de plusieurs modules fonctionnels (18, 20) stockés dans les moyens de stockage (14) et exécutables par le processeur (12), dans lequel :
- la plate-forme logicielle (16) comporte un module fonctionnel (18) d'élaboration d'un fichier (24) de commandes de tests fonctionnels pour l'interface en ligne de commande (22) et une interface associée (UI₁₈) dédiée à la saisie de ces commandes de tests fonctionnels dans au moins un bloc exécutable (26) du fichier de commandes (24),
- la plate-forme logicielle (16) comporte un module fonctionnel (20) d'exécution du fichier de commandes (24), conçu pour activer l'interface en ligne de commande (22) et y exécuter ledit au moins un bloc exécutable (26) du fichier de commandes (24),
**caractérisé en ce que** :
- l'interface (UI₁₈) associée au module fonctionnel (18) d'élaboration du fichier de commandes (24) est en outre dédiée à la saisie de descripteurs des commandes de tests fonctionnels dans au moins un bloc descriptif (28) du fichier de commandes (24) et à l'identification dudit au moins un bloc descriptif (28) dans le fichier de commandes (24) comme différent dudit au moins un bloc exécutable (26), et
- le module fonctionnel (20) d'exécution du fichier de commandes (24) est conçu pour ne pas exécuter ledit au moins un bloc descriptif (28) du fichier de commandes (24) dans l'interface en ligne de commande (22).

2. Système (10) d'élaboration et d'exécution de tests fonctionnels selon la revendication 1, dans lequel :
- une interface de programmation applicative (30) exécutable par le module fonctionnel (20) d'exécution du fichier de commandes (24) est en outre stockée dans les moyens de stockage (14) et comporte une pluralité de commandes (32) de vérification de résultats des commandes de tests fonctionnels, et
- l'interface (UI₁₈) associée au module fonctionnel (18) d'élaboration du fichier de commandes (24) est en outre dédiée à la saisie de ces commandes de vérification (32) dans ledit au moins un bloc exécutable (26) du fichier de commandes (24).

3. Système (10) d'élaboration et d'exécution de tests fonctionnels selon la revendication 2, dans lequel le module fonctionnel (20) d'exécution du fichier de commandes (24) est conçu pour exécuter l'interface de programmation applicative (30) dans l'interface en ligne de commande (22).

4. Système (10) d'élaboration et d'exécution de tests fonctionnels selon la revendication 2 ou 3, dans lequel la pluralité de commandes de vérification (32) comporte au moins deux éléments de l'ensemble des commandes de vérification suivantes :
- une vérification d'égalité stricte entre deux paramètres,
- une vérification d'égalité approximative entre deux paramètres, à un écart prédéterminé près,
- une vérification d'inégalité stricte entre deux paramètres,
- une comparaison entre deux paramètres par critère de supériorité, stricte ou égale, ou par critère d'infériorité, stricte ou égale,
- une vérification de valeur booléenne,
- une vérification d'ensemble vide,
- une vérification d'ensemble non vide,
- une vérification d'inclusion d'une première chaîne de caractère(s) dans une deuxième chaîne de caractère(s),
- une vérification de non inclusion d'une première chaîne de caractère(s) dans une deuxième chaîne de caractère(s),
- une vérification d'égalité stricte entre deux listes de paramètres, et
- une vérification d'égalité stricte entre deux ensembles de paramètres distincts.

5. Système (10) d'élaboration et d'exécution de tests fonctionnels selon la revendication 4, dans lequel la pluralité de commandes de vérification (32) comporte en outre une commande de création d'un fichier de résultats et d'inscription, dans ce fichier de résultats, de tous les résultats d'autres commandes de vérification saisies avant cette commande de création de fichier de résultats dans ledit au moins un bloc exécutable (26) du fichier de commandes (24).

6. Système (10) d'élaboration et d'exécution de tests fonctionnels selon l'une quelconque des revendications 2 à 5, dans lequel l'interface associée au module fonctionnel d'élaboration du fichier de commandes est en outre dédiée à la saisie de descripteurs formulés selon un format de récit d'utilisateur en trois éléments descriptifs successifs incluant :
- un premier élément d'identification d'un utilisateur,
- un deuxième élément d'identification d'une action de test équivalente à au moins une commande de test fonctionnel, et
- un troisième élément d'identification d'au moins une finalité de vérification équivalente à au moins l'une des commandes de vérification de l'interface de programmation applicative.

7. Système (10) d'élaboration et d'exécution de tests fonctionnels selon l'une quelconque des revendications 1 à 6, dans lequel l'interface (UI₁₈) associée au module fonctionnel (18) d'élaboration du fichier de commandes (24) est stockée dans les moyens de stockage (14) sous la forme d'une application logicielle web.

8. Grappe de serveurs (44) comportant des nœuds de calcul et de service interconnectés par au moins un réseau (80, 82, 84, 88) de transmission de données entre ces nœuds de calcul et de service, dans laquelle au moins un nœud de service est un serveur d'administration (48) comportant un système (10) d'élaboration et d'exécution de tests fonctionnels selon l'une quelconque des revendications 1 à 7.

9. Installation informatique comportant :
- une grappe de serveurs (44) comportant des nœuds de calcul et de service interconnectés par au moins un réseau (80, 82, 84, 88) de transmission de données entre ces nœuds de calcul et de service,
- un terminal informatique distant (40) de commande de la grappe de serveurs (44), ce terminal (40) comportant un système (10) d'élaboration et d'exécution de tests fonctionnels selon l'une quelconque des revendications 1 à 7, pour l'élaboration et l'exécution de tests fonctionnels portant sur au moins une partie des équipements de la grappe de serveurs (44), et
- un réseau (42) de transmission de données entre le terminal informatique distant (40) et la grappe de serveurs (44).

10. Procédé d'élaboration et d'exécution de tests fonctionnels portant sur des équipements d'un réseau en grappe de serveurs (44), comportant les étapes suivantes :
- élaboration (100, 102, 104) d'un fichier (24) de commandes de tests fonctionnels exécutables par une interface en ligne de commande (22), à l'aide d'une interface (UI₁₈) dédiée à la saisie de ces commandes de tests fonctionnels dans au moins un bloc exécutable (26) du fichier de commandes (24), cette interface de saisie (UI₁₈) étant associée à un module fonctionnel (18) d'élaboration du fichier de commandes (24) d'une plate-forme logicielle (16) exécutée par au moins un processeur (12) ayant accès à des moyens de stockage (14) du module fonctionnel d'élaboration (18) et de l'interface en ligne de commande (22),
- exécution (108) du fichier de commandes (24) par un module fonctionnel d'exécution (20) de la plate-forme logicielle (16) stocké dans les moyens de stockage (14), ce module fonctionnel d'exécution (20) étant conçu pour activer (106) l'interface en ligne de commande (22) et y exécuter (108) ledit au moins un bloc exécutable (26) du fichier de commandes (24),
**caractérisé en ce que** :
- l'élaboration (100, 102, 104) du fichier de commandes (24) comporte la saisie (102) de descripteurs des commandes de tests fonctionnels dans au moins un bloc descriptif (28) du fichier de commandes (24) et l'identification dudit au moins un bloc descriptif (28) dans le fichier de commandes (24) comme différent dudit au moins un bloc exécutable (26), et
- l'exécution (106) du fichier de commandes (24) comporte l'exclusion dudit au moins un bloc descriptif (28) du fichier de commandes (24) dans ce qui doit être exécuté par l'interface en ligne de commande (22).

## Patentansprüche

1. System (10) zum Formulieren und Ausführen von Funktionstests, die sich auf Geräte eines Netzwerks von Cluster-DE-Servern (44) beziehen, umfassend mindestens einen Prozessor (12), Speichermittel (14), eine Befehlszeilenschnittstelle (22), die in den Speichermitteln (14) gespeichert ist und durch den Prozessor (12) ausgeführt werden kann, sowie eine Softwareplattform (16), die aus mehreren Funktionsmodulen (18, 20) besteht, die in den Speichermitteln (14) gespeichert sind und vom Prozessor (12) ausgeführt werden können, wobei:
- die Softwareplattform (16) ein Funktionsmodul (18) zum Formulieren einer Datei (24) mit Funktionstestbefehlen für die Befehlszeilenschnittstelle (22) und eine zugeordnete Schnittstelle (UI₁₈) umfasst, die dazu vorgesehen ist, die Funktionstestbefehle in mindestens einen ausführbaren Block (26) der Befehlsdatei (24) einzugeben,
die Softwareplattform (16) ein Funktionsmodul (20) zum Ausführen der Befehlsdatei (24) umfasst, das dazu ausgelegt ist, die Befehlszeilenschnittstelle (22) zu aktivieren und dort den mindestens einen ausführbaren Block (26) der Befehlsdatei (24) auszuführen,
**dadurch gekennzeichnet, dass:**
die Schnittstelle (UI₁₈), die dem Funktionsmodul (18) zum Formulieren der Befehlsdatei (24) zugeordnet ist, ferner dazu vorgesehen ist, Deskriptoren der Funktionstestbefehle in mindestens einen Deskriptorenblock (28) der Befehlsdatei (24) einzugeben und den mindestens einen Deskriptorenblock (28) in der Befehlsdatei (24) als von dem mindestens einen ausführbaren Block (26) verschieden zu identifizieren, und das Funktionsmodul (20) zum Ausführen der Befehlsdatei (24) so ausgelegt ist, dass es den mindestens einen Deskriptorenblock (28) der Befehlsdatei (24) in der Befehlszeilenschnittstelle (22) nicht ausführt.

2. System (10) zum Formulieren und Ausführen von Funktionstests nach Anspruch 1, wobei:
- eine Anwendungsprogrammierschnittstelle (30), die von dem Funktionsmodul (20) zum Ausführen der Befehlsdatei (24) ausgeführt werden kann, ferner in den Speichermitteln (14) gespeichert ist und eine Vielzahl von Befehlen (32) zum Überprüfen der Ergebnisse der Funktionstestbefehle umfasst, und
die Schnittstelle (UI₁₈), die dem Funktionsmodul (18) zum Formulieren der Befehlsdatei (24) zugeordnet ist, ferner dazu vorgesehen ist, die Überprüfungsbefehle (32) in den mindestens einen ausführbaren Block (26) der Befehlsdatei (24) einzugeben.

3. System (10) zum Formulieren und Ausführen von Funktionstests nach Anspruch 2, wobei das Funktionsmodul (20) zum Ausführen der Befehlsdatei (24) so ausgelegt ist, dass es die Anwendungsprogrammierschnittstelle (30) in der Befehlszeilenschnittstelle (22) ausführt.

4. System (10) zum Formulieren und Ausführen von Funktionstests nach Anspruch 2 oder 3, wobei die Vielzahl von Überprüfungsbefehlen (32) mindestens zwei Elemente aus der Menge folgender Überprüfungsbefehle umfasst:
- eine Überprüfung auf strikte Gleichheit zwischen zwei Parametern,
- eine Überprüfung auf ungefähre Gleichheit zwischen zwei Parametern bis zu einer vorbestimmten Abweichung,
- eine Überprüfung auf strikte Ungleichheit zwischen zwei Parametern,
- einen Vergleich zwischen zwei Parametern nach dem Kriterium der Überlegenheit, strikt oder gleich, oder nach dem Kriterium der Unterlegenheit, strikt oder gleich,
- eine Überprüfung auf einen booleschen Wert,
- eine Überprüfung auf eine leere Menge,
- eine Überprüfung auf eine nicht leere Menge,
- eine Überprüfung, ob eine erste Zeichenfolge in einer zweite Zeichenfolge eingeschlossen ist,
- eine Überprüfung, ob eine erste Zeichenfolge in einer zweiten Zeichenfolge nicht eingeschlossen ist,
- eine Prüfung auf strikte Gleichheit zwischen zwei Listen von Parametern, und
- eine Überprüfung auf strikte Gleichheit zwischen zwei unterschiedlichen Mengen von Parametern.

5. System (10) zum Formulieren und Ausführen von Funktionstests nach Anspruch 4, wobei die Vielzahl von Überprüfungsbefehlen (32) ferner einen Befehl zum Erstellen einer Ergebnisdatei und zum Einschreiben aller Ergebnisse anderer Überprüfungsbefehle, die vor diesem Befehl zum Erstellen der Ergebnisdatei in dem mindestens einen ausführbaren Block (26) der Befehlsdatei (24) eingegeben wurden, in diese Ergebnisdatei umfasst.

6. System (10) zum Formulieren und Ausführen von Funktionstests nach einem der Ansprüche 2 bis 5, wobei die Schnittstelle, die dem Funktionsmodul zum Formulieren der Befehlsdatei zugeordnet ist, ferner dazu vorgesehen ist, Deskriptoren einzugeben, die gemäß einem Format eines Benutzerberichts in drei aufeinanderfolgenden Deskriptorenelementen formuliert sind, einschließlich:
- ein erstes Element zur Identifizierung eines Benutzers,
- ein zweites Element zur Identifizierung einer Testaktion, die mindestens einem Funktionstestbefehl entspricht, und
- ein drittes Element zur Identifizierung mindestens eines Überprüfungszwecks, der mindestens einem der Überprüfungsbefehle der Anwendungsprogrammierschnittstelle entspricht.

7. System (10) zum Formulieren und Ausführen von Funktionstests nach einem der Ansprüche 1 bis 6, wobei die Schnittstelle (UI₁₈), die dem
Funktionsmodul (18) zum Formulieren der Befehlsdatei (24) zugeordnet ist, in den Speichermitteln (14) in Form einer webbasierten Softwareanwendung gespeichert ist.

8. Cluster-DE-Server (44), umfassend Rechen- und Dienstknoten, die durch mindestens ein Netzwerk (80, 82, 84, 88) zum Übertragen von Daten zwischen den Rechen- und Dienstknoten miteinander verbunden sind, wobei mindestens ein Dienstknoten ein Verwaltungsserver (48) ist, der ein System (10) zum Formulieren und Ausführen von Funktionstests nach einem der Ansprüche 1 bis 7 umfasst.

9. Computeranlage, umfassend:
- einen Cluster-DE-Server (44), umfassend Rechen- und Dienstknoten, die durch mindestens ein Netzwerk (80, 82, 84, 88) zum Übertragen von Daten zwischen den Rechen- und Dienstknoten miteinander verbunden sind,
- ein entferntes Computerterminal (40) zum Steuern der Cluster-DE-Server (44), wobei das Terminal (40) ein System (10) zum Formulieren und Ausführen von Funktionstests nach einem der Ansprüche 1 bis 7 umfasst, um Funktionstests zu formulieren und auszuführen, die sich auf mindestens einen Teil der Geräte der Cluster-DE-Server (44) beziehen, und
- ein Netzwerk (42) zum Übertragen von Daten zwischen dem entfernten Computerterminal (40) und den Cluster-DE-Servern (44).

10. Verfahren zum Formulieren und Ausführen von Funktionstests, die sich auf Geräte eines Netzwerk von Cluster-DE-Servern (44) beziehen, umfassend folgende Schritte:
- Formulieren (100, 102, 104) einer Datei (24) mit Funktionstestbefehlen, die über eine Befehlszeilenschnittstelle (22) ausführbar sind, mithilfe einer Schnittstelle (UI₁₈), die dazu vorgesehen ist, die Funktionstestbefehle in mindestens einen ausführbaren Block (26) der Befehlsdatei (24) einzugeben, wobei die Eingabeschnittstelle (UI₁₈) einem Funktionsmodul (18) zum Formulieren der Befehlsdatei (24) einer Softwareplattform (16) zugeordnet ist, die von mindestens einem Prozessor (12) ausgeführt wird, der Zugriff auf Speichermittel (14) des Formulierungsfunktionsmoduls (18) und der Befehlszeilenschnittstelle (22) hat,
- Ausführen (108) der Befehlsdatei (24) durch ein Ausführungsfunktionsmodul (20) der Softwareplattform (16), das in den Speichermitteln (14) gespeichert ist, wobei das Ausführungsfunktionsmodul (20) dazu ausgelegt ist, die Befehlszeilenschnittstelle (22) zu aktivieren (106) und dort den mindestens einen ausführbaren Block (26) der Befehlsdatei (24) auszuführen (108),
**dadurch gekennzeichnet, dass:**
- das Formulieren (100, 102, 104) der Befehlsdatei (24) das Eingeben (102) von Deskriptoren der Funktionstestbefehle in mindestens einen Deskriptorenblock (28) der Befehlsdatei (24) und das Identifizieren des mindestens einen Deskriptorenblocks (28) in der Befehlsdatei (24) als von dem mindestens einen ausführbaren Block (26) verschieden umfasst, und
- das Ausführen (106) der Befehlsdatei (24) das Ausschließen des mindestens einen Deskriptorenblocks (28) der Befehlsdatei (24) in dem umfasst, was von der Befehlszeilenschnittstelle (22) ausgeführt werden soll.

## Claims

1. A system (10) for producing and executing functional tests on equipment in a server cluster network (44), comprising at least one processor (12), storage means (14), a command line interface (22) stored in the storage means (14) and executable by the processor (12), as well as a software platform (16) consisting of a plurality of functional modules (18, 20) stored in the storage means (14) and executable by the processor (12), wherein:
- the software platform (16) comprises a functional module (18) for producing a file (24) of functional test commands for the command line interface (22) and an associated interface (UI₁₈) dedicated to entering these functional test commands in at least one executable block (26) of the command file (24),
- the software platform (16) comprises a functional module (20) for executing the command file (24), designed to activate the command line interface (22) and to execute therein said at least one executable block (26) of the command file (24),
**characterized in that:**
- the interface (UI₁₈) associated with the functional module (18) for producing the command file (24) is additionally dedicated to entering descriptors of the functional test commands in at least one descriptive block (28) of the command file (24) and to identifying said at least one descriptive block (28) in the command file (24) as being different from said at least one executable block (26), and
- the functional module (20) for executing the command file (24) is designed not to execute said at least one descriptive block (28) of the command file (24) in the command line interface (22).

2. The system (10) for producing and executing functional tests according to claim 1, wherein:
- an application programming interface (30) executable by the functional module (20) for executing the command file (24) is additionally stored in the storage means (14) and comprises a plurality of commands (32) for verifying results of the functional test commands, and
- the interface (UI₁₈) associated with the functional module (18) for producing the command file (24) is additionally dedicated to entering these verification commands (32) in said at least one executable block (26) of the command file (24).

3. The system (10) for producing and executing functional tests according to claim 2, wherein the functional module (20) for executing the command file (24) is designed to execute the application programming interface (30) in the command line interface (22).

4. The system (10) for producing and executing functional tests according to claim 2 or 3, wherein the plurality of verification commands (32) comprises at least two elements of the following set of verification commands:
- a verification of strict equality between two parameters,
- a verification of approximate equality between two parameters, within a predetermined deviation,
- a verification of strict inequality between two parameters,
- a comparison between two parameters by criterion of superiority, strict or equal, or by criterion of inferiority, strict or equal,
- a verification of Boolean value,
- a verification of empty set,
- a verification of non-empty set,
- a verification of inclusion of a first character string in a second character string,
- a verification of non-inclusion of a first character string in a second character string,
- a verification of strict equality between two lists of parameters, and
- a verification of strict equality between two distinct sets of parameters.

5. The system (10) for producing and executing functional tests according to claim 4, wherein the plurality of verification commands (32) additionally comprises a command to create a results file and to write into this results file all the results of other verification commands entered prior to this command to create a results file in said at least one executable block (26) of the command file (24).

6. The system (10) for producing and executing functional tests according to any one of claims 2 to 5, wherein the interface associated with the functional module for producing the command file is further dedicated to entering descriptors formulated according to a user story format in three successive descriptive elements including:
- a first identification element of a user,
- a second identification element of a test action equivalent to at least one functional test command, and
- a third identification element of at least one verification purpose equivalent to at least one of the verification commands of the application programming interface.

7. The system (10) for producing and executing functional tests according to any one of claims 1 to 6, wherein the interface (UI₁₈) associated with the functional module (18) for producing the command file (24) is stored in the storage means (14) in the form of a web software application.

8. A server cluster (44) comprising computing and service nodes interconnected by at least one network (80, 82, 84, 88) for transmitting data between these computing and service nodes, wherein at least one service node is an administration server (48) comprising a system (10) for producing and executing functional tests according to any one of claims 1 to 7.

9. A computer system comprising:
- a server cluster (44) comprising computing and service nodes interconnected by at least one network (80, 82, 84, 88) for transmitting data between these computing and service nodes,
- a remote computer terminal (40) for commanding the server cluster (44), this terminal (40) comprising a system (10) for producing and executing functional tests according to any one of claims 1 to 7, for producing and executing functional tests on at least part of the equipment of the server cluster (44), and
- a network (42) for transmitting data between the remote computer terminal (40) and the server cluster (44).

10. A method for producing and executing functional tests on equipment in a server cluster network (44), comprising the following steps:
- producing (100, 102, 104) a file (24) of functional test commands executable by a command line interface (22), by means of an interface (UI₁₈) dedicated to entering these functional test commands in at least one executable block (26) of the command file (24), this input interface (UI₁₈) being associated with a functional module (18) for producing the command file (24) of a software platform (16) executed by at least one processor (12) having access to storage means (14) of the functional production module (18) and the command line interface (22),
- executing (108) the command file (24) by a functional execution module (20) of the software platform (16) stored in the storage means (14), this functional execution module (20) being designed to activate (106) the command line interface (22) and to execute (108) therein said at least one executable block (26) of the command file (24),
**characterized in that:**
- producing (100, 102, 104) the command file (24) comprises entering (102) descriptors of the functional test commands in at least one descriptive block (28) of the command file (24) and identifying said at least one descriptive block (28) in the command file (24) as being different from said at least one executable block (26), and
- executing (106) the command file (24) comprises excluding said at least one descriptive block (28) of the command file (24) in what is to be executed by the command line interface (22).
